# EUROPEAN PATENT SPECIFICATION

(11) **EP 1 571 389 B1**
(45) Date of publication and mention of the grant of the patent: **21.04.2010**
(21) Application number: 03777176.3
(22) Date of filing: 02.12.2003
(51) Int. Cl.: F17C 1/06

(54) **PRESSURE CONTAINER AND METHOD OF MANUFACTURING THE PRESSURE CONTAINER**
DRUCKBEHÄLTER UND VERFAHREN ZUR HERSTELLUNG DES DRUCKBEHÄLTERS
RECIPIENT SOUS PRESSION ET SON PROCEDE DE FABRICATION

(30) Priority: 02.12.2002 JP 2002350373
(43) Date of publication of application: 07.09.2005
(73) Proprietor: MITSUBISHI RAYON CO., LTD., Tokyo 108-8506 (JP)
(72) Inventor: TAKEMOTO, Hidehiro c/o Mitsubishi Rayon Co., Ltd., Toyohashi-shi, Aichi 440-8601 (JP); ISHIMORI, Takumi c/o Mitsubishi Rayon Co., Ltd., Toyohashi-shi, Aichi 440-8601 (JP); SUGIURA, Masayuki c/o Mitsubishi Rayon Co., Ltd., Toyohashi-shi, Aichi 440-8601 (JP)
(74) Representative: HOFFMANN EITLE
(86) International application number: PCT/JP2003/015426
(87) International publication number: WO 2004/051138

(56) References cited:
- WO-A2-01/62477
- JP-A- 6 331 032
- JP-A- 11 230 347
- JP-A- 50 144 121
- JP-A- 2000 249 294
- JP-A- 2001 181 406
- US-A- 3 240 644
- US-A- 4 589 562
- US-A1- 2002 029 449
- VARGA ET AL: "Design of CNG tank made of aluminium and reinforced plastic" COMPOSITES, IPC BUSINESS PRESS LTD. HAYWARDS HEATH, GB, vol. 26, no. 6, 1 January 1995 (1995-01-01) , pages 457-463, XP005502847 ISSN: 0010-4361
- DUEREN C: "FASERVERSTAERKTE STAHLBEHAELTER ALS WIRTSCHAFTLICHERE LOESUNG ZUM TRANSPORT VON WASSERSTOFF" STAHL UND EISEN, VERLAG STAHLEISEN, DUSSELDORF, DE, vol. 112, no. 6, 15 June 1992 (1992-06-15) , pages 105-111,163, XP000278761 ISSN: 0340-4803

## Description

### TECHNICAL FIELD

The present invention relates to a pressure vessel used as a storage vessel for high pressure gas, and to a method for producing the pressure vessel.

### BACKGROUND ART

Vessels made of steel have been used as storage vessel s for high pressure gas. However, vessels made of steel are heavy and a large amount of labor is necessary for moving and transportation. For example, in an automobile using gas fuel, in order to reduce the weight of the automobile and to reduce fuel consumption, reducing the weight of a fuel storage vessel has been desired.

As storage vessels for high pressure gas, pressure vessels made of a composite material, in which a resin liner or a metal liner is reinforced with a reinforced fiber, have been used instead of conventional steel vessels. The pressure vessel made of fiber reinforced composite material can increase charging pressure and reduce weight.

Representative examples of winding process of the reinforced fiber in the production of the pressure vessel made of a fiber reinforced composite material include a filament winding process. The filament winding process is a process in which a continuous reinforced fiber impregnated in resin is wound around a liner such as a vessel body, and then the resin is hardened to produce a pressure vessel made of fiber reinforced composite material.
Patent document 1 suggests a pressure vessel comprising at least two fiber reinforced composite material layers made of different kinds of reinforced fiber. The pressure vessel can increase burst pressure (improve a burst property) by adjusting a strand elastic modulus of an outer layer to be higher than that of an inner layer, and thereby stresses applied to the outer and inner layers are equivalent.
[Patent document 1] Japanese Unexamined Patent Application, First Publication No. H6-331032

FIG. 3 shows a pressure vessel disclosed in Patent document 1. The pressure vessel 50 comprises cover layers 52, 53, and 54, which are made of fiber reinforced resin, by winding reinforced materials covered with resin 52a, 53a, and 54a around a body portion 51a of a cylindrical metal liner 51 (vessel body), in this order, from an inner side to an outer side.

In the pressure vessel 50, tensile stresses applied to each cover layer 52, 53, and 54 in the circumferential direction are substantially equivalent by adjusting a strand elastic modulus of an outer layer to be higher than that of an inner layer. Due to this, the pressure vessel 50 has high pressure tightness and reduced weight.

Although the pressure vessel has sufficient burst pressure, it has another problem. That is, since the pressure vessel is broken into pieces, it is necessary to prevent scattering of the pieces.

In addition, it is important for pressure vessels to have not only excellent burst property but also excellent fatigue property. In particular, the fatigue property of a pressure vessel comprising a liner (vessel body) made of metal such as aluminum is improved by subjecting it to an auto-frettage treatment at high pressure to apply compressive stress to the liner such that applied compressive stress is in a linearity range of the liner.

However, when a pressure vessel is produced while compressive stress applied to the liner is considered as a very important factor, there is a case in which burst pressure is larger than what is wanted. In contrast, when a pressure vessel is produced while burst pressure is considered as a very important factor, the pressure vessel cannot endure the necessary compressive stress. As a result, there is a problem in that the weight of the pressure vessel increases.

In addition, standards of pressure vessels such as High Pressure Gas Safety Institute of Japan (KHK) S 1121 are standardized based on properties of glass fiber, in particular, fatigue property. Therefore, pressure vessels, which are produced using a reinforced fiber having excellent fatigue property, have unnecessary high safety.

US 2002/0029449 A1, considered as closest prior art, discloses a process for manufacturing a pressure vessel, in which a liner is wrapped around the vessel having a predetermined strength, a first pressure, which is greater than the yield pressure, is applied to the vessel, and afterwards a second liner is wrapped around the vessel.

### DISCLOSURE OF THE INVENTION

In consideration of the above-described problems, an object of the present invention is to provide a pressure vessel, which is excellent in fatigue property and burst property, and has reduced weight, and a method for producing a pressure vessel.

The pressure vessel may comprise a fiber reinforced resin layer, which is made of a reinforced fiber impregnated in resin, on a surface of a vessel body, wherein the pressure vessel may be produced by forming the fiber reinforced resin layer on the surface of the vessel body, hardening the fiber reinforced resin layer, and then applying an internal pressure and plastically deforming the vessel body such that a distortion of the surface of the vessel body in a circumferential direction of the vessel body be in a range of 0.7% to 0.9%, and wherein the pressure vessel has a burst pressure, which is 2.2 to 2.8 times as large as a charging pressure.

The method for producing a pressure vessel of the present invention comprises the steps of: forming a fiber reinforced resin layer, which is made of a reinforced fiber impregnated in resin, on a surface of a vessel body; hardening the fiber reinforced resin layer to obtain a pressure vessel having a burst pressure, which is 2.2 to 2.8 times as large as a charging pressure; and applying an internal pressure and plastically deforming the vessel body such that a distortion of the surface of the vessel body in a circumferential direction of the vessel body be in a range of 0.7% to 0.9%.

According to the pressure vessel and the method for producing a pressure vessel of the present invention, since the vessel body is subjected to a treatment so called auto-frettage treatment, in which the vessel body is applied to an internal pressure and plastically deformed such that the distortion of the surface of the vessel body in the circumferential direction be in a range of 0.7% to 0.9%, and the pressure vessel has a burst pressure, which is 2.2 to 2.8 times as large as a charging pressure, the pressure vessel and the method for producing a pressure vessel of the present invention improve fatigue property and burst property of the pressure vessel, and reduce weight of the pressure vessel.

### BRIEF DESCRIPTION OF THE DRAWINGS

FIG. 1 is a cross-sectional view showing one embodiment of the pressure vessel according to the present invention.
FIGS. 2A to 2D are explanatory views for one method for producing the pressure vessel shown in FIG. 1.

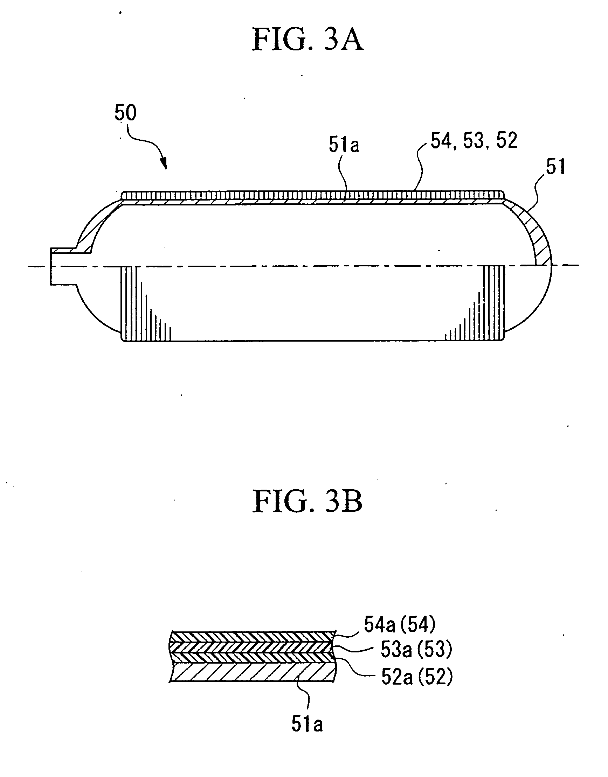

FIG. 3A is a partial cross-sectional view for explaining a conventional pressure vessel, and FIG. 3B is an enlarged view showing a main part of the pressure vessel shown in FIG. 3A.

### BEST MODE FOR CARRYING OUT THE INVENTION

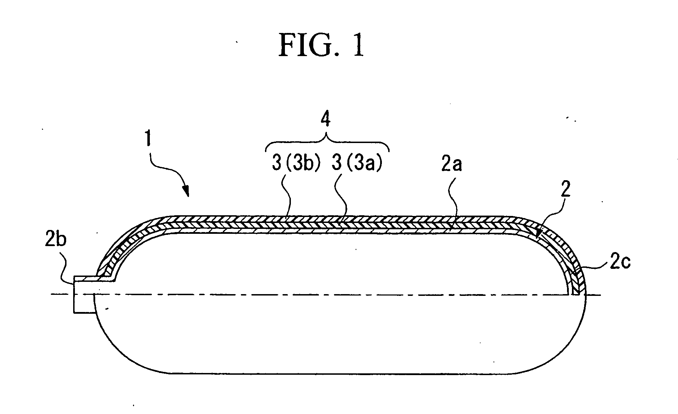

FIG. 1 is a cross-sectional view showing one embodiment of the pressure vessel according to the present invention.

The pressure vessel 1 comprises a fiber reinforced resin layer 4, which is made of a reinforced fiber 3 impregnated in resin, on the surface of a substantially cylindrical vessel body 2. In FIG. 1, reference numeral 2a denotes a body of the pressure vessel, 2b denotes an open portion, and 2c denotes a bottom.

The vessel body 2 is preferably made of metal. There is no limitation for metal comprising the vessel body 2, but examples of the metal include aluminum alloys, magnesium alloys, and iron. In particular, aluminum alloys are preferable for reducing the weight of the vessel body 2.

The fiber reinforced resin layer 4 preferably has a multilayer structure. The fiber reinforced resin layer 4 shown in FIG. 1 has a structure comprising a circumferential orientation layer 3a in which a reinforced fiber resin 3 is wound around the vessel body 2 such that the orientation direction of the reinforced fiber resin 3 is the circumferential direction of the vessel body 2, and an axial orientation layer 3b in which the reinforced fiber resin 3 is wound around the circumferential orientation layer 3a such that the orientation direction of the reinforced fiber resin 3 is the axial direction of the vessel body 2.

In the present invention, the fiber reinforced resin layer is not limited to the layer shown in the figures, and can have a structure in which a plurality of circumferential orientation layers and axial orientation layers are alternately layered on the vessel body. In particular, when the outermost layer of the fiber reinforced resin layer 4 is the circumferential orientation layer 3a, good appearance is obtained. A number and a thickness of each layer can be determined depending on an intended use, a kind of content, and a size of the pressure vessel, and the like.

The resin (matrix resin) impregnating a reinforced fiber is not particularly limited, but examples thereof include epoxy resin, vinyl ester resin, phenol resin, acrylic resin, and the like.

The reinforced fiber is not particularly limited, but examples thereof include carbon fiber, glass fiber, aramid fiber, boron fiber, PBO fiber, and the like.

In addition, when a reinforced fiber having ductility in a range of 1.4% to 1.6% is used, excellent fatigue property and burst property are effectively obtained.

Fatigue property and burst property are improved by using two or more kinds of reinforced fibers having different strand elastic moduli. For example, fatigue property and burst property are improved by making the fiber reinforced resin layer 4 comprise a plurality of layers, that is, making the fiber reinforced resin layer 4 have a multilayered structure, and adjusting a strand elastic modulus of one layer constituting the fiber reinforced resin layer 4 to be different from a strand elastic modulus of another layer constituting the fiber reinforced resin layer 4. In this case, when a strand elastic modulus of an inner layer (a layer near the vessel body 2) is high, the pressure vessel does not readily break into pieces, and safety of the pressure vessel is improved.

When a strand elastic modulus of the reinforced fiber is 250 GPa or greater, fatigue property is improved and the weight of the pressure vessel is reduced.

Next, one example of a method for producing the pressure vessel 1 is explained.

### (1) Formation of the fiber reinforced resin layer

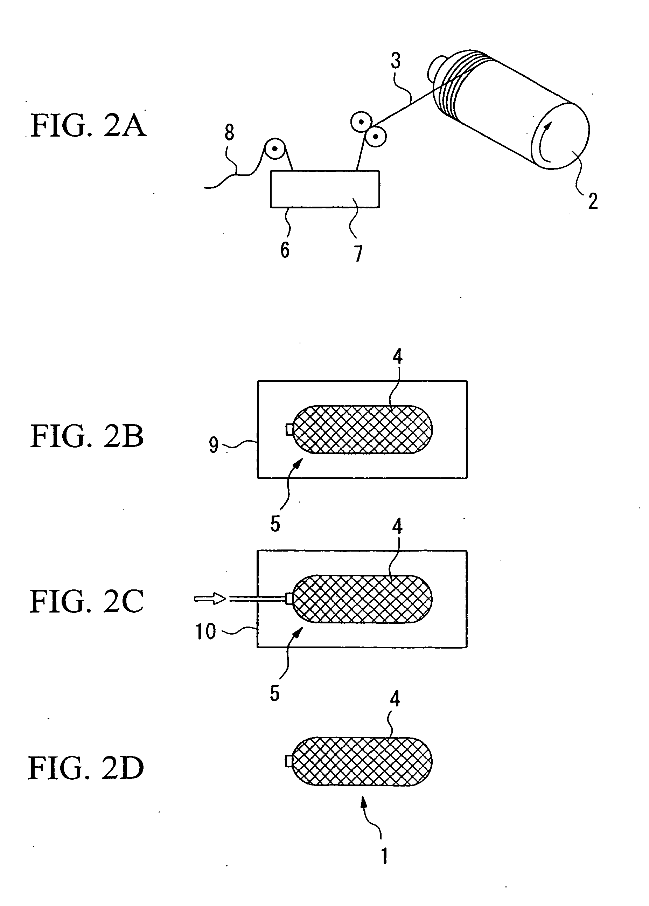

As shown in FIG. 2A, the reinforced fiber resin 3 is obtained by impregnating the reinforced fiber 8 in a matrix resin 7 in a container 6.

Next, while the vessel body 2 rotates in the circumferential direction, the reinforced fiber resin 3 is wound around the vessel body 2. Due to this, the circumferential orientation layer 3a, in which the fiber orientation direction of the reinforced fiber resin 3 is the circumferential direction of the vessel body 2, is formed. After that, the axial orientation layer 3b is formed. In order to form the axial orientation layer 3b, the fiber orientation direction of the reinforced fiber resin 3 is adjusted to the longitudinal direction of the vessel body 2. Thereby, an intermediate vessel 5, which comprises the circumferential orientation layer 3a and the axial orientation layer 3b, is obtained.

In order to form further the reinforced fiber resin layer 3 on the axial orientation layer 3b, the same method as explained above can be adopted.

### (2) Hardening of the fiber reinforced rein layer

As shown in FIG. 2B, the obtained intermediate vessel 5 is heated in a heating furnace 9.

The heating temperature is preferably in a range of 40 to 180°C. When the heat temperature is less than 40°C, or more than 180°C, fatigue property and burst property of the pressure vessel 1 are degraded.

The fiber reinforced resin layer 4 is hardened by this heat treatment.

In the present invention, production conditions are adjusted such that the burst pressure is 2.2 to 2.8 times as large as the charging pressure (and preferably in a range of 2.4 to 2.7 times).

### (3) Auto-frettage treatment

As shown in FIG. 2C, an auto-frettage treatment is carried out such that the distortion of the vessel surface in the circumferential direction is 0.7% or greater (and more preferably 0.75% or greater) and 0.9% or less (and more preferably 0.85% or less) using the auto-frettage machine 10. The auto-frettage treatment is a treatment in which the internal pressure of the intermediate vessel 5 increases (below, a largest internal pressure at this time is denoted by an auto-frettage treatment pressure) to plastically deform the vessel body comprising a liner, and then the internal pressure decreases, and thereby compressive stress is applied to the vessel body 2 due to stiffness of the fiber reinforced resin layer 4.

The auto-frettage treatment pressure is preferably 5/3 or greater times as large as a charging pressure and less than a burst pressure. If the auto-frettage treatment pressure is kept in this range, when filling and discharging of a charging medium are carried out repeatedly, which applies compressive stress to the vessel body 2, since pressure applied to the vessel body 2 is in a range of linearity of material comprising the vessel body 2, excellent fatigue property is yielded.

When the auto-frettage treatment pressure is outside of the range (in which the distortion of the vessel surface in the circumferential direction is in a range of 0.7% to 0.9%), fatigue property and burst property of the pressure vessel 1 are degraded.

The pressure vessel 1 is obtained by these processes (as shown in FIG. 2D).

As explained above, the production conditions of the pressure vessel 1 are adjusted such that a burst pressure is 2.2 to 2.8 times as large as a charging pressure (and preferably in a range of 2.4 to 2.7 times).

When a burst pressure is less than 2.2 times as large as a charging pressure, fatigue property and burst property of the pressure vessel 1 are insufficient. In contrast, when it excesses 2.8 times as large as a charging pressure, fatigue property and burst property of the pressure vessel 1 are excessive. In this case, since the weight of the vessel increases, it is not preferable.

A burst pressure denotes an internal pressure of a vessel when the vessel is bursted by increasing an internal pressure of the vessel.

Since a distortion of the vessel surface in the circumferential direction when the vessel is subjected to the auto-frettage treatment is in a range of 0.7% to 0.9%, and a burst pressure is 2.2 to 2.8 times as large as a charging pressure, it is possible to improve fatigue property and burst property of the pressure vessel 1 and make the reinforced fiber resin 3 (fiber reinforced resin layer 4) thinner, and reduce the weight.

### Examples

Below, functions and effects of the pressure vessel according to the present invention will be explained with reference to embodiments.

Evaluation methods in Examples and Comparative Examples are explained.

### (1) Measuring method for burst pressure (burst property)

The produced pressure vessel was arranged in a water pressure burst tester marketed by Mitsubishi Rayon Co., Ltd., and water pressure at a pressure rise rate of 1.4 MPa or less was applied to the vessel, and the pressure when the vessel bursted was measured. The measurement was carried out 3 times, and the average of these results was calculated.

### (2) Fatigue property

The produced pressure vessel was arranged in a water pressure cycle tester marketed by Mitsubishi Rayon Co., Ltd., and pressure fluctuation, in which an internal pressure of the vessel increased from atmospheric pressure to a pressure, which was 5/3 times as large as a charging pressure and then pressure reduced to atmospheric pressure, was repeatedly at the rate of about 2 times/min until the vessel bursted. The number of pressure fluctuation needed to burst the vessel was counted. The measurement was carried out 3 times, and the average of these results was calculated.

### (3) Weight reduction property

Weight reduction property was evaluated by measuring the weight of the fiber reinforced resin layer 4 of the pressure vessel.

The materials used in the Examples and Comparative Examples were as follows.

### (1) Reinforced fiber

(a) Reinforced fiber 1: A carbon fiber TRH 50-12L marketed by Mitsubishi Rayon Co., Ltd.; diameter of a single fiber: 7 µm; filament number: about 12,000; strand strength: 4,900 MPa; strand elastic modulus: 255 GPa; and ductility: 1.9%
(b) Reinforced fiber 2: A carbon fiber MR 40-12K marketed by Mitsubishi Rayon Co., Ltd.; diameter of a single fiber: 6 µm; filament number: about 12,000; strand strength: 4,400 MPa; strand elastic modulus: 295 GPa; and ductility: 1.5%
(c) Reinforced fiber 3: A carbon fiber MR 50-12K marketed by Mitsubishi Rayon Co., Ltd.; diameter of a single fiber: 6 µm; filament number: about 12,000; strand strength: 5,300 MPa; strand elastic modulus: 290 GPa; and ductility: 1.8%
(d) Reinforced fiber 4: A carbon fiber HR 40-12K marketed by Mitsubishi Rayon Co., Ltd.; diameter of a single fiber: 6 µm; filament number: about 12,000; strand strength: 4,600 MPa; strand elastic modulus: 390 GPa; and ductility: 1.2%
(e) Reinforced fiber 5: A carbon fiber TR 50S-ALA-12L marketed by Mitsubishi Rayon Co., Ltd.; diameter of a single fiber: 7 µm; filament number: about 12,000; strand strength: 4,900 MPa; strand elastic modulus: 238 GPa; and ductility: 2.0%

### (2) Matrix resin

Resin 1: Epoxy resin #700B (composition: EPICOAT® 828/ XN1045/BYK-A506) marketed by Mitsubishi Rayon Co., Ltd.

### (3) Toe pre-impregnation material

(a) Toe pre-impregnation material 1: WDE-3D-1 (MR60H-24P) comprising one toe marketed by Newport Adhesives and Composites Inc.
   This toe pre-impregnation material 1 is obtained by previously impregnating a carbon fiber MR 60H-24P marketed by Mitsubishi Rayon Co., Ltd with epoxy resin (viscosity at 50°C: about 30 poise), and this has a width of about 4 mm, and resin impregnation percentage of about 28% by mass. The carbon fiber used has a diameter of a single fiber of 5 µm, filament number of about 24,000, strand strength of 5,700 MPa, and strand elastic modulus of 295 GPa.
(b) Toe pre-impregnation material 2: WDE-3D-1 (HR40-12L) marketed by Newport Adhesives and Composites inc.

This toe pre-impregnation material 2 is obtained by changing a carbon fiber MR60H-24P comprising the toe pre-impregnation material 1 to a carbon fiber HR40-12L marketed by Mitsubishi Rayon Co., Ltd.. This has a width of about 3.5 mm, and resin content of about 28% by mass. The carbon fiber used has a diameter of a single fiber of 7 µm, filament number of about 12,000, strand strength of 4,600 MPa, and a strand elastic modulus of 390 GPa.

In the toe pre-impregnation materials 1 and 2, a strand elastic modulus was measured by preparing test pieces in accordance with JIS R 7610, recording a load-elongation curve in a tensile test, and calculating based on the inclination of the load-elongation curve (specifically, based on ΔP/ΔL, wherein ΔP denotes an increase amount (20 kgf) of load from 40 kgf to 60 kgf, and ΔL denotes an increase of length of material by applying the load). The resin, which was used to prepare the test pieces, was epoxy resin containing ERL-4221 (alicyclic epoxy resin; marketed by Dow Chemical Japan Ltd.) and anchor 1115 (monoisopropylamine boron trifluoride complex; marketed by PTI Japan Ltd.) as hardening agents.

### (4) Vessel main body

An aluminum vessel main body having a capacity of 9 liters (total length: 540 mm, length of the body portion: 415 mm, outer diameter of the body portion: 163 mm, thickness at the center of the body portion: 3 mm) was used.

### Example 1

A pressure vessel having a charging pressure of 70 MPa was produced by the following processes.

As shown in FIG. 2A, the reinforced fiber resin 3, in which the Reinforced fiber 2 was impregnated in the Resin 1, was wound around the vessel body 2 using a filament winding machine marketed by Entec Composite Machines Inc. to produce the fiber reinforced resin layer 4. The reinforced resin layer 4 had a five-layer structure comprising the circumferential orientation layer 3a/ the axial orientation layer 3b/ the circumferential orientation layer 3a/ the axial orientation layer 3b/ the circumferential orientation layer 3a from the inner side to the outer side. The thickness of the fiber reinforced resin layer 4 at the center of the body portion of the intermediate vessel 5 was about 13 mm.

As shown in FIG. 2B, the intermediate vessel 5 was put in a heating furnace 9, and the temperature inside the heating furnace 9 increased from room temperature to 135°C at 1°C/min.. After confirmation of increase of the temperature at the surface of the fiber reinforced resin layer 4 to 135°C, the intermediate vessel 5 was allowed to stand for 1 hour. After that, the temperature of the heating furnace 9 was decreased to 60°C at 1°C/min., then the intermediate vessel 5 was taken out from the heating furnace 9, and this was allowed to stand to cool to room temperature. The weight of the reinforced resin layer 4 was 5,653 g.

As shown in FIG. 2C, the intermediate vessel 5 was subjected to an auto-frettage treatment, in which the auto-frettage temperature was 125 MPa, using the auto-frettage machine 10 marketed by Mitsubishi Rayon Co. Ltd. to apply compressive pressure to the vessel body 2, and thereby the pressure vessel 1 was produced. The distortion of the surface of the vessel in the circumferential direction during the auto-frettage treatment was 0.81%.

The burst pressure (average) of the resulting pressure vessel was 184 MPa. This value was 2.6 times as large as the charging pressure. Each pressure vessel 1 bursted ideally such that only a hole was formed near the center of the body portion and the pressure vessel was not divided.

As a result of the fatigue property test, a number (average) of pressure fluctuations needed to burst the pressure vessel 1 was 11,078 times.

As explained above, it was confirmed that the pressure vessel 1 had excellent burst property and fatigue property. In addition, since the pressure vessel 1 of the Example 1 comprised of the fiber reinforced resin layer having a weight of 5,653 g, the weight of the pressure vessel 1 was reduced.

### Comparative Example 1

A pressure vessel having a charging pressure of 70 MPa was produced by the following processes. In the Comparative Example 1, a reinforced fiber having a relatively high ductility was used.

The fiber reinforced resin layer 4 comprising reinforced fiber resin 3, in which the Reinforced fiber 1 was impregnated in the Resin 1, was wound around the vessel body 2 to produce the intermediate vessel 5. The reinforced resin layer 4 had the same five-layer structure as in the Example 1. The thickness of the fiber reinforced resin layer 4 at the center of the body portion of the intermediate vessel 5 was about 15 mm.

The intermediate vessel 5 was subjected to the heating treatment similarly in the Example 1. The weight of the reinforced resin layer 4 was 6,641 g.

After that, the intermediate vessel 5 was subjected to the same auto-frettage treatment as in the Example 1 to produce the pressure vessel. The distortion of the surface of the pressure vessel in the circumferential direction during the auto-frettage treatment was 0.81%.

The burst pressure of the resulting pressure vessel was 231 MPa. This value was 3.3 times as large as the charging pressure. Each pressure vessel 1 bursted ideally such that only a hole was formed near the center of the body portion and the pressure vessel was not divided.

As a result of the fatigue property test, a number of pressure fluctuations needed to burst the pressure vessel 1 was 10,818 times.

It was confirmed that since the pressure vessel 1 prepared in the Comparative Example 1 had improved burst property and fatigue property by using a reinforced fiber having a high ductility, the pressure vessel 1 had high level fatigue property, but the weight increased.

### Comparative Example 2

A pressure vessel having a charging pressure of 70 MPa was produced by the following processes. In the Comparative Example 2, a reinforced fiber having a relative low ductility was used.

The fiber reinforced resin layer 4 comprising a reinforced fiber resin 3, in which the Reinforced fiber 4 was impregnated in the Resin 1, was formed on the vessel body 2 to produce the intermediate vessel 5.

The reinforced resin layer 4 had the same five-layer structure as in the Example 1. The thickness of the fiber reinforced resin layer 4 at the center of the body portion of the intermediate vessel 5 was about 9 mm.

The intermediate vessel 5 was subjected to the heating treatment similarly in the Example 1. The weight of the reinforced resin layer 4 was 4,129 g.

After that, the intermediate vessel 5 was subjected to the same auto-frettage treatment as in the Example 1 to produce the pressure vessel. The distortion of the surface of the pressure vessel in the circumferential direction during the auto-frettage treatment was 0.81%.

The burst pressure of the resulting pressure vessel was 148 MPa. This value was 2.1 times as large as the charging pressure. The pressure vessel was divided at near the center of the body portion.

As a result of the fatigue property test, a number of pressure fluctuations needed to burst the pressure vessel 1 was 4,783 times.

It was confirmed that the pressure vessel 1 prepared in the Comparative Example 2 had a reduced weight by using a reinforced fiber having a low ductility, but the burst pressure decreased and the charging pressure also decreased, and the fatigue property also degraded.

### Example 2

A pressure vessel having a charging pressure of 70 MPa was produced by the following processes.

The circumferential orientation layer 3a/ the axial orientation layer 3b/ the circumferential orientation layer 3a were formed in this order on the vessel body 2 using a reinforced fiber resin 3, in which the Reinforced fiber 4 was impregnated in the Resin 1.

Next, the intermediate vessel 5 was produced by forming the axial orientation layer 3b/ the circumferential orientation layer 3a were formed in this order on the circumferential orientation layer 3a using a reinforced fiber resin 3, in which the Reinforced fiber 3 having ductility larger than that of the Reinforced fiber 4 was impregnated in the Resin 1.

In the pressure vessel 1, the fiber reinforced resin layer 4 had a five-layer structure, and the strand elastic modulus of the reinforced fiber used in the inner three layers was higher than the strand elastic modulus of the reinforced fiber used in the outer two layers.

The thickness of the fiber reinforced resin layer 4 at the center of the body portion of the intermediate vessel 5 was about 10.5 mm.

The intermediate vessel 5 was subjected to the heating treatment similarly in the Example 1. The weight of the reinforced resin layer 4 was 4,861 g.

After that, the intermediate vessel 5 was subjected to the same auto-frettage treatment as in the Example 1 to produce the pressure vessel. The distortion of the surface of the pressure vessel in the circumferential direction during the auto-frettage treatment was 0.81%.

The burst pressure of the resulting pressure vessel was 188 MPa. This value was 2.7 times as large as the charging pressure. Each pressure vessel 1 bursted ideally such that only a hole was formed near the center of the body portion and the pressure vessel was not divided.

As a result of the fatigue property test, a number of pressure fluctuations needed to burst the pressure vessel 1 was 10,329 times.

It was confirmed that the pressure vessel 1 had excellent burst property results and fatigue property results, and the weight of the pressure vessel 1 was reduced.

### Comparative Example 3

A pressure vessel having a charging pressure of 70 MPa was produced by the following processes.

The intermediate vessel 5 was produced by forming the fiber reinforced resin layer 4 on the vessel body 2 using a reinforced fiber resin 3, in which the Reinforced fiber 5 was impregnated in the Resin 1.

The reinforced resin layer 4 had the same five-layer structure as in the Example 1. The thickness of the fiber reinforced resin layer 4 at the center of the body portion of the intermediate vessel 5 was about 16.5 mm.

The intermediate vessel 5 was subjected to the heating treatment similarly in the Example 1. The weight of the reinforced resin layer 4 was 7,355 g.

After that, the intermediate vessel 5 was subjected to the same auto-frettage treatment as in the Example 1 to produce the pressure vessel. The distortion of the surface of the pressure vessel in the circumferential direction during the auto-frettage treatment was 0.81%.

The burst pressure of the resulting pressure vessel was 247 MPa. This value was 3.5 times as large as the charging pressure. Each pressure vessel 1 bursted ideally such that only a hole was formed near the center of the body portion and the pressure vessel was not divided.

As a result of the fatigue property test, a number of pressure fluctuations needed to burst the pressure vessel 1 was 10,818 times.

It was confirmed that the pressure vessel 1 had excellent burst property and fatigue property, but this had inferior weight reduction property.

### Comparative Example 4

A comparative pressure vessel having a charging pressure of 70 MPa was produced in a manner identical to that of the Example 1, except that the auto-frettage treatment pressure was 105 MPa. The weight of the reinforced resin layer 4 was 5,631 g.

The distortion of the surface of the pressure vessel in the circumferential direction during the auto-frettage treatment was 0.68%.

In addition, the burst pressure of the resulting pressure vessel was 186 MPa. This value was 2.7 times as large as the charging pressure. Each pressure vessel bursted ideally such that only a hole was formed near the center of the body portion and the pressure vessel was not divided.

As a result of the fatigue property test, a number of pressure fluctuations needed to burst the pressure vessel 1 was 1,055 times.

The pressure vessel which had the auto-frettage treatment pressure was less than 5/3 times as large as the charging pressure (70 X 5/3 = 117 MPa), had a remarkably inferior fatigue property.

### Comparative Example 5

A comparative pressure vessel having a charging pressure of 70 MPa was produced in a manner identical to that of the Example 1, except that the auto-frettage treatment pressure was 140 MPa. The distortion of the surface of the pressure vessel in the circumferential direction during the auto-frettage treatment was 0.91%. The weight of the reinforced resin layer 4 was 5,647 g.

In addition, the burst pressure of the resulting pressure vessel was 183 MPa. This value was 2.6 times as large as the charging pressure. Each pressure vessel bursted ideally such that only a hole was formed near the center of the body portion and the pressure vessel was not divided.

As a result of the fatigue property test, a number of pressure fluctuations needed to burst the pressure vessel 1 was 1,612 times.

Since the pressure vessel had a high auto-frettage treatment pressure, compressive stress which was applied to the vessel body under conditions in which a load was not applied, exceeded the yield point of the material comprising the vessel body, and the pressure vessel had a remarkably inferior fatigue property.

### Example 3

A pressure vessel having a charging pressure of 70 MPa was produced in a manner identical to that of the Example 2, except that the Toe pre-impregnation material 2 was used instead of the reinforced fiber resin in which the Reinforced fiber 4 was impregnated in the Resin 1, and the Toe pre-impregnation material 1 was used instead of the reinforced fiber resin in which the Reinforced fiber 3 was impregnated in the Resin 1. The weight of the reinforced resin layer was 4,608 g.

The distortion of the surface of the pressure vessel in the circumferential direction during the auto-frettage treatment was 0.81%.

In addition, the burst pressure of the resulting pressure vessel was 187 MPa. This value was 2.7 times as large as the charging pressure. Each pressure vessel bursted ideally such that only a hole was formed near the center of the body portion and the pressure vessel was not divided.

As a result of the fatigue property test, a number of pressure fluctuations needed to burst the pressure vessel 1 was 10,186 times.

The results obtained in the Examples and the Comparative Examples are shown in Table 1.

The pressure vessels obtained in the Examples 1 to 3 had superior burst property and fatigue property, and had reduced weight, and they bursted ideally.

In contrast, even when the comparative pressure vessel had superior burst property and fatigue property, they had a problem in reducing weight (Comparative Examples 1 and 3). Even when the comparative pressure vessel has reduced weight, they had inferior burst property and fatigue property (Comparative Examples 2, 4, and 5). The bursted conditions of the comparative pressure vessel obtained in the Comparative Example 2 were inferior.

**Table 1**

| | Fiber reinforced resin layer | | | | Auto-frettage pressure (MPa) | Distortion (%) | Burst pressure (MPa) | Burst pressure / charging pressure (-) | Number of pressure fluctuations (N) | Burst conditions |
|---|---|---|---|---|---|---|---|---|---|---|
| | Reinforced fiber / resin | | Thickness (mm) | Weight (g) | | | | | | |
| | First to Third layers | Fourth and Fifth layers | | | | | | | | |
| Ex. 1 | MR40/#700B | same as on the left | 13 | 5,653 | 125 | 0.81 | 184 | 2.6 | 11,078 | One piece |
| Comp .Ex. 1 | TRH50/#700B | same as on the left | 15 | 6,641 | 125 | 0.81 | 231 | 3.3 | 10,818 | One piece |
| Comp .Ex. 2 | HR40/#700B | same as on the left | 9 | 4,129 | 125 | 0.81 | 148 | 2.1 | 4,783 | Two pieces or more |
| Ex. 2 | HR40/#700B | MR50/#700B | 10.5 | 4,861 | 125 | 0.81 | 188 | 2.7 | 10,329 | One piece |
| Comp .Ex. 3 | TR50S/#700B | same as on the left | 16.5 | 7,355 | 125 | 0.81 | 247 | 3.5 | 10,818 | One piece |
| Comp .Ex. 4 | MR40/#700B | same as on the left | 13 | 5,631 | 105 | 0.68 | 186 | 2.7 | 1,055 | One piece |
| Comp .Ex. 5 | MR40/#700B | same as on the left | 13 | 5,647 | 140 | 0.91 | 183 | 2.6 | 1,612 | One piece |
| Ex. 3 | HR40/WDE | MR60H/WDE | 10 | 4,608 | 125 | 0.81 | 187 | 2.7 | 10,186 | One piece |

| | | | | | | | | | | |
|---|---|---|---|---|---|---|---|---|---|---|
| First to Fifth layers: the outermost layer is the "First layer" and the innermost layer is the "Fifth layer". TRH50: Reinforced fiber 1 MR40: Reinforced fiber 2 #700: Resin 1 MR60H/WDE: Toe pre-impregnation material 1 MR50: Reinforced fiber 3 HR40: Reinforced fiber 4 HR40/WDE: Toe pre-impregnation material 2 TR50S: Reinforced fiber 5 "One piece" denotes a burst with no division of the pressure vessel. "Two pieces or more" denotes a burst with division of the pressure vessel. | | | | | | | | | | |

### INDUSTRIAL APPLICABILITY

As explained above, in the pressure vessel and the method for producing a pressure vessel of the present invention, since the distortion on the surface of the vessel in the circumferential direction during the auto-frettage treatment of the fiber reinforced resin layer is in a range of 0.7% to 0.9%, and the burst pressure is adjusted to be 2.2 to 2.8 times as large as the charging pressure, the fatigue property and the burst property are improved, and the weight of the pressure vessel is reduced.

The pressure vessel of the present invention is used preferably as a storage vessel for high pressure gas.

The present invention can be changed as far as the change of the constitution is within the scope of the present invention. The embodiments explained above are simple examples, the present invention is not limited to the above embodiments. In addition, the scope of the present invention is limited only by the claims, and is not limited by the foregoing description. Modifications, as far as which are in the range of claims, can be made in the present invention.

## Claims

1. A method for producing a pressure vessel comprising the steps of:
forming a fiber reinforced resin layer (4), which is made of a reinforced fiber (3) impregnated in resin, on a surface of a vessel body;
hardening the fiber reinforced resin layer (4) to obtain a pressure vessel having a burst pressure, which is 2.2 to 2.8 times as large as a charging pressure; and
applying an internal pressure and plastically deforming the vessel body (2) such that a distortion of the surface of the vessel body in a circumferential direction of the vessel body be in a range of 0.7% to 0.9%.

2. A method according to claim 1, wherein the reinforced fiber (3) has ductility in a range of 1.4% to 1.6%.

3. A method according to claim 1, wherein the reinforced fiber (3) has a strand elastic modulus of 250 GPa or greater.

4. A method according to claim 1, wherein the fiber reinforced resin layer (4) has a multilayered structure, and a strand elastic modulus of one layer constituting the fiber reinforced resin layer (4) is different from a strand elastic modulus of another layer constituting the fiber reinforced resin layer (4).

5. A method according to claim 1, wherein the fiber reinforced resin layer (4) has a multilayered structure comprising a circumferential orientation layer in which an orientation direction of the reinforced fiber impregnated in resin is a circumferential direction of the vessel body, and an axial orientation layer in which an orientation direction of the reinforced fiber impregnated in resin is an axial direction of the vessel body.

6. A method according to claim 5, wherein the reinforced resin layer (4) comprises the circumferential orientation layer and the axial orientation layer which are alternately layered.

7. A method according to claim 5, wherein an outermost layer of the reinforced resin layer is the circumferential orientation layer.

8. A method according to claim 1, wherein the vessel body is made of an aluminum alloy.

## Patentansprüche

1. Verfahren zur Herstellung eines Druckbehälters, umfassend die Schritte:
Formen einer faserverstärkten Harzschicht (4), die aus einer mit Harz imprägnierten, verstärkten Faser (3) hergestellt ist, auf einer Oberfläche eines Behälterkörpers,
Härten der faserverstärkten Harzschicht (4), um einen Druckbehälter zu erhalten, der einen Berstdruck aufweist, der 2,2 bis 2,8 mal so groß ist wie sein Fülldruck, und
Anlegen eines Innendrucks und plastisches Deformieren des Behältniskörpers (2), so dass eine Formänderung der Oberfläche des Behältniskörpers in Umfangsrichtung des Behältniskörpers in einem Bereich von 0,7% bis 0,9% liegt.

2. Verfahren nach Anspruch 1, bei dem die verstärkte Faser (3) eine Duktilität im Bereich von 1,4% bis 1,6% aufweist.

3. Verfahren nach Anspruch 1, bei dem die verstärkte Faser (3) ein Strangelastizitätsmodul von 250 GPa oder mehr aufweist.

4. Verfahren nach Anspruch 1, bei dem die faserverstärkte Harzschicht (4) einen vielschichtigen Aufbau aufweist, und ein Elastizitätsmodul eines Strangs einer Schicht, die die faserverstärkte Harzschicht (4) ausbildet, sich von einem Elastizitätsmodul eines Strangs einer anderen Schicht, die die faserverstärkte Harzschicht (4) ausbildet, unterscheidet.

5. Verfahren nach Anspruch 1, bei dem die faserverstärkte Harzschicht (4) einen vielschichtigen Aufbau aufweist, umfassend eine in Umfangsrichtung orientierte Schicht, in der eine Ausrichtungsrichtung der verstärkten Fasern, die mit Harz imprägniert sind, in Umfangsrichtung des Behälterkörpers verläuft und eine in Axialrichtung orientierte Schicht, in der eine Ausrichtungsrichtung der verstärkten Fasern, die mit Harz imprägniert sind, in Axialrichtung des Behälterkörpers verläuft.

6. Verfahren nach Anspruch 5, bei dem die verstärkte Harzschicht (4) die in Umfangsrichtung orientierte Schicht und die in Axialrichtung orientierte Schicht, welche alternierend geschichtet sind, umfasst.

7. Verfahren nach Anspruch 5, bei dem eine äußerste Schicht der verstärkten Harzschicht die in Umfangsrichtung orientierte Schicht ist.

8. Verfahren nach Anspruch 1, bei dem der Behälterkörper aus einer Aluminiumlegierung hergestellt ist.

## Revendications

1. Procédé de fabrication d'un récipient sous pression comprenant les étapes consistant à :
former une couche de résine renforcée par fibre (4), qui est faite d'une fibre renforcée (3) imprégnée dans une résine, sur une surface d'un corps de récipient ;
faire durcir la couche de résine renforcée par fibre (4) pour obtenir un récipient sous pression possédant une pression de rupture, qui est 2,2 à 2,8 fois plus importante qu'une pression de charge ; et
appliquer une pression interne et déformer de façon plastique le corps de récipient (2) de sorte qu'une distorsion de la surface du corps de récipient dans une direction circonférentielle du corps de récipient soit dans une plage allant de 0,7 % à 0,9 %.

2. Procédé selon la revendication 1, dans lequel la fibre renforcée (3) possède une ductilité dans une plage allant de 1,4 % à 1,6 %.

3. Procédé selon la revendication 1, dans lequel la fibre renforcée (3) possède un module d'élasticité de brin de 250 GPa ou plus.

4. Procédé selon la revendication 1, dans lequel la couche de résine renforcée par fibre (4) possède une structure à couches multiples, et un module d'élasticité de brin d'une couche constituant la couche de résine renforcée par fibre (4) est différent d'un module d'élasticité de brin d'une autre couche constituant la couche de résine renforcée par fibre (4).

5. Procédé selon la revendication 1, dans lequel la couche de résine renforcée par fibre (4) possède une structure à couches multiples comprenant une couche d'orientation circonférentielle, dans laquelle une direction d'orientation de la fibre renforcée imprégnée dans la résine est une direction circonférentielle du corps de récipient, et une couche d'orientation axiale, dans laquelle une direction d'orientation de la fibre renforcée imprégnée dans la résine est une direction axiale du corps de récipient.

6. Procédé selon la revendication 5, dans lequel la couche de résine renforcée (4) comprend la couche d'orientation circonférentielle et la couche d'orientation axiale qui sont stratifiées en alternance.

7. Procédé selon la revendication 5, dans lequel une couche la plus extérieure de la couche de résine renforcée est la couche d'orientation circonférentielle.

8. Procédé selon la revendication 1, dans lequel le corps de récipient est fait d'un alliage d'aluminium.
